(19) Europäisches Patentamt
European Patent Office
Office européen des brevets

(11) EP 0 512 524 B1

(12) EUROPÄISCHE PATENTSCHRIFT

(45) Veröffentlichungstag und Bekanntmachung des Hinweises auf die Patenterteilung:
**29.07.1998 Patentblatt 1998/31**

(51) Int Cl.6: **C09D 175/04**, C08G 18/44, C09D 5/10

(21) Anmeldenummer: **92107679.0**

(22) Anmeldetag: **07.05.1992**

# (54) Physikalisch trocknendes Überzugsmittel auf wässriger Basis, dessen Herstellung und dessen Verwendung

Physically drying water-borne coatings, their preparation and their use

Compositions de revêtement à base aqueuse, séchant physiquement, leur préparation et leur utilisation

(84) Benannte Vertragsstaaten:
**AT BE CH DE ES FR GB GR IT LI NL PT SE**

(30) Priorität: **08.05.1991 DE 4115015**

(43) Veröffentlichungstag der Anmeldung:
**11.11.1992 Patentblatt 1992/46**

(73) Patentinhaber: **Herberts Gesellschaft mit beschränkter Haftung**
**42285 Wuppertal (DE)**

(72) Erfinder:
- **Brock, Thomas, Dr.**
  **W-5030 Hürth (DE)**
- **Patzschke, Hans-Peter, Dr.**
  **W-5600 Wuppertal 2 (DE)**
- **Sadowski, Fritz, Dr.**
  **W-5024 Pulheim 2 (DE)**

(74) Vertreter: **Türk, Gille, Hrabal, Leifert**
**Brucknerstrasse 20**
**40593 Düsseldorf (DE)**

(56) Entgegenhaltungen:
**EP-A- 0 073 392** **EP-A- 0 427 979**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft physikalisch trocknende Überzugsmittel auf wäßriger Basis, die insbesondere für die Herstellung von Metallic-Überzügen geeignet sind.

Wäßrige Überzugsmittel sind zur Herstellung von Basisschichten mehrschichtiger Überzüge bekannt. Beispielsweise werden in der EP-A-0 089 497 wasserverdünnbare Überzugsmittel auf der Basis von Polyurethandispersionen beschrieben, die nach einem bestimmten Aufbauverfahren aus Polyether- und/oder Polyesterdiolen, Diisocyanaten, Verbindungen mit zwei gegenüber Isocyanat reaktiven Gruppen und mindestens einer anionischen Gruppe, Di- und/oder Polyaminen, hergestellt werden. Derartige Überzugsmittel werden, gegebenenfalls nach Überschichtung mit einem Decklack, bei erhöhter Temperatur von beispielsweise 130 bis 150°C eingebrannt.

In Industrie und Gewerbe besteht jedoch auch ein Bedürfnis nach physikalisch trocknenden Überzugsmitteln, die insbesondere zur Reparaturlackierung von verschiedenen Substraten, wie Metallgegenständen, insbesondere auf dem Kraftfahrzeugsektor oder zur Lackierung von Maschinen geeignet sind. Für derartige Zwecke sind Überzugsmittel erforderlich, die bei Raumtemperatur oder bei geringfügigem Erwärmen, beispielsweise auf bis zu 60ºC, trocknen bzw. härten.

Derartige physikalisch trocknende überzugsmittel, die beispielsweise für Reparaturlackierungen von Kraftfahrzeugen geeignet sind, sind bekannt, beispielsweise aus der DE-Patentschrift 29 24 632. Es handelt sich dabei jedoch um nicht-wäßrige Systeme auf der Basis organischer Lösungsmittel.

Aufgabe der Erfindung ist die Bereitstellung eines physikalisch trocknenden Überzugsmittels auf wäßriger Basis.

Es hat sich gezeigt, daß diese Aufgabe durch das den Gegenstand der Erfindung bildende Überzugsmittel gelöst werden kann, das enthält

8 bis 30 Gew.-% eines Bindemittels, bei dem es sich um ein Gemisch handelt aus

A) 10 bis 90 Gew.-%, bevorzugt 50 bis 90 Gew.-% eines oder mehrerer Carbonatgruppierungen enthaltender Polyurethane mit einem Zahlenmittel der Molmasse (Mn) von 70000 bis 500000, in Form einer wäßrigen Dispersion, und

B) 10 bis 90 Gew.-%, bevorzugt 10 bis 50 Gew.-% eines oder mehrerer Carbonsäureestergruppen enthaltender Polyurethane mit einem Zahlenmittel der Molmasse (Mn) von 20000 bis 100000, in Form einer wäßrigen Dispersion,

wobei sich die Gewichtsprozente der Komponenten A) und B) jeweils auf den Bindemittelfestkörper beziehen und auf 100 Gew.-% addieren,

50 bis 85 Gew.% Wasser,

1 bis 20 Gew.-% eines oder mehrerer Lösemittel,

0,3 bis 4 Gew.-% eines oder mehrerer Metallicpigmente,

0 bis 10 Gew.-% eines oder mehrerer färbender und/oder effektgebender Pigmente,

Neutralisationsmittel zur Erzielung eines Neutralisationsgrades der neutralisierbaren Gruppen des Bindemittels von 40 bis 120 %,
sowie gegebenenfalls übliche Additive und Hilfsstoffe,
wobei die Bindemittelkomponente

A) erhältlich ist durch Umsetzung von

a) 10 bis 40 Gew.-% eines oder mehrerer organischer Polyisocyanate, die keine hydrophilen oder in hydrophile Gruppen überführbare Gruppen aufweisen,

b) 40 bis 80 Gew.-% einer oder mehrerer höhermolekularer organischer Polyhydroxylverbindungen, die keine hydrophilen oder in hydrophile Gruppen überführbare Gruppen aufweisen, und die zumindest zu 50 Gew.-% aus einem oder mehreren Polyhydroxypolycarbonaten bestehen,

c) 0 bis 18 Gew.-% Wasser und/oder einer oder mehrerer niedermolekularer Verbindungen, die mindestens

zwei gegenüber Isocyanatgruppen reaktionsfähige Gruppen, jedoch keine hydrophilen oder in hydrophile Gruppen überführbare Gruppen aufweisen,

d) 0 bis 8 Gew.-% einer oder mehrerer nicht-ionisch-hydrophiler Verbindungen, die mindestens eine Isocyanatgruppe oder mindestens eine gegenüber Isocyanatgruppen reaktionsfähige Gruppe aufweisen und

e) 1 bis 12 Gew.-% einer oder mehrerer Verbindungen, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen,

und wobei die Bindemittelkomponente

B) erhältlich ist durch Umsetzung von

f) 10 bis 40 Gew.-% eines oder mehrerer organischer Polyisocyanate, die keine hydrophilen oder in hydrophile Gruppen überführbare Gruppen aufweisen,

g) 40 bis 80 Gew.-% einer oder mehrerer höhermolekularer organischer Polyhydroxylverbindungen, die keine hydrophilen oder in hydrophile Gruppen überführbare Gruppen aufweisen,

h) 0 bis 18 Gew.-% Wasser und/oder eier oder mehrerer niedermolekularer Verbindungen, die mindestens zwei gegenüber Isocyanatgruppen reaktionsfähige Gruppen, jedoch keine hydrophilen oder in hydrophile Gruppen überführbare Gruppen aufweisen,

i) 0 bis 8 Gew.-% einer oder mehrerer nicht-ionisch-hydrophiler Verbindungen, die mindestens eine Isocyanatgruppe oder mindestens eine gegenüber Isocyanatgruppen reaktive Gruppe aufweisen, und

j) 1 bis 12 Gew.-% einer oder mehrerer Verbindungen, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen.

Die erfindungsgemäßen Überzugsmittel enthalten als Bindemittelkomponente A) ein oder mehrere Polyurethane, die Carbonatgruppierungen enthalten. Diese Polyurethane können gegebenenfalls auch Harnstoffgruppierungen enthalten, so daß es sich auch um Polyurethanharnstoffe handeln kann.

Bevorzugt weisen die als Komponente A) eingesetzten Polyurethane mindestens 200 Milliäquivalente pro 100 g Feststoff an chemisch eingebauten Carbonatgruppierungen -O-CO-O- auf. Sie enthalten bevorzugt nicht mehr als insgesamt 320 Milliäquivalente pro 100 g Feststoff an chemisch eingebauten Urethangruppierungen -NH-CO-O- und gegebenenfalls chemisch eingebauten Harnstoffgruppierungen -NH-CO-NH-. Beispiele für derartig verwendbare Polyurethane sind in der DE-Patentanmeldung 39 36 794.0 vom 4. November 1989 beschrieben.

Die Komponente A) der erfindungsgemäßen Überzugsmittel ist erhältlich durch Umsetzung der vorstehend definierten Komponenten a), b), c) gegebenenfalls d), und e). Die Komponente a) wird in einer Menge von 10 bis 40 Gew.-%, bevorzugt 15 bis 35 Gew.-%, jeweils bezogen auf den Festkörpergehalt der Komponente A), eingesetzt. Als typische Beispiele der verwendbaren organischen Polyisocyanate können multifunktionelle Isocyanate verwendet werden, wie aliphatische Polyisocyanate, cycloaliphatische Polyisocyanate und/oder aromatische Gruppen enthaltende Polyisocyanate, bei denen bevorzugt die Isocyanatfunktionen an aliphatische Gruppen gebunden sind. Die Polyisocyanate weisen im Durchschnitt mehr als eine, bevorzugt mindestens zwei Isocyanatgruppen pro Molekül und eine Molmasse von 112 bis 1000, vorzugsweise 140 bis 400 auf. Sie enthalten als funktionelle Gruppe bevorzugt zwei Isocyanatgruppen, die im Molekül asymmetrisch oder symmetrisch angeordnet sind. Bevorzugt werden die Isomeren oder Isomerengemische von organischen Diisocyanaten. Ein Beispiel für aromatische Gruppen enthaltende Diisocyanate ist Tetramethylxylylendiisocyanat.

Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyanat, sowie die Hydrierungsprodukte der aromatischen Diisocyanate wie Cyclohexylendiisocyanat, Methylcyclohexylendiisocyanat, und Dicyclohexylmethandiisocyanat. Aliphatische Diisocyanate sind Verbindungen der Formel

$$O=C=N-(CR_2)_r-N=C=O$$

worin r eine ganze Zahl von 2 bis 20, inbesondere 6 bis 8 ist und R, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexyl-methandiisocyanat. Die,zur Bildung des Präpolymeren gebrauchte Polyisocyanat-Komponente kann auch einen Anteil höherwertiger Polyisocyanate enthalten, vorausgesetzt sie wird nicht durch Gelbildungen beeinträchtigt. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan.
Die mittlere Funktionalität kann gegebenenfalls durch Zusatz von Monosisocyanaten gesenkt werden. Beispiele für solche kettenabbrechenden Monoisocyanate sind Phenylisocyanat, Cyclohexylisocyanat und Stearylisocyanat.

Die zur Herstellung der Bindemittelkomponente A) verwendete Komponente b) wird in Mengen von 40 bis 80 Gew.-%, bevorzugt 45 bis 75 Gew.-%, jeweils bezogen auf den Gesamt-Festkörper der Komponente A), eingesetzt. Bei der Komponente b) handelt es sich vorzugsweise um organische Polyhydroxylverbindungen mit einer Molmasse von 300 bis 5000, vorzugsweise 500 bis 3000, wobei sich die Komponente b) zumindest zu 50 Gew.-%, vorzugsweise zu mehr als 70 Gew.-% aus Polyhydroxypolycarbonaten dieses Molekulargewichtsbereichs zusammensetzt. Unter diesen erfindungswesentlichen Aufbaukomponenten sind Ester der Kohlensäure zu verstehen, die durch Reaktion von Kohlesäurederivaten, z.B. Diphenylcarbonat oder Phosgen, mit Diolen erhalten wurden. Als derartige Diole kommen z.B. Ethylenglykol, Propandiol-1,2 und -1,3, Butandiol-1,4 und -1,3, Hexandiol-1,6, Octandiol-1,8, Neopentylglykol, 1,4-Bishydroxymethylcyclohexan, 2-Methyl-1,3-propandiol, 2,2,4-Trimethylpentandiol-1,3, ferner Diethylenglykol, Tri- und Tetraethylenglykol, Dipropylenglykol, Polypropylenglykole, Dibutylenglykol, Polybutylenglykole, Bisphenol A, Tetrabrombisphenol A in Frage. Vorzugsweise enthält die Diolkomponente 40 bis 100 Gew.-% Hexandiol, vorzugsweise Hexandiol-1,6, und/oder Hexandiol-Derivate, vorzugsweise solche, die neben endstandigen OH-Gruppen Ether- oder Estergruppen aufweisen, z.B. Produkte, die durch Umsetzung von 1 Mol Hexandiol mit ≥1 Mol, bevorzugt 1 bis 2 Mol Caprolacton gemäß DE-AS 17 70 245, oder durch Veretherung von Hexandiol mit sich selbst zum Di- oder Trihexylenglykol erhalten wurden. Die Herstellung solcher Derivate ist z.B. aus DE-AS 1 570 540 bekannt. Auch die in DE-OS 37 17 060 beschriebenen Polyether-Polycarbonatdiole können sehr gut eingesetzt werden.

Die Hydroxylpolycarbonate sollen im wesentlichen linear sein. Sie können jedoch gewünschtenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit und Sorbit, Methylglykosid, 1,4,3,6-Dianhydrohexite.

Neben diesen Polyhydroxypolycarbonaten kann die Aufbaukomponente b) auch andere, aus der Polyurethanchemie an sich bekannte, Polyhydroxylverbindungen des genannten Molekulargewichtsbereichs enthalten wie z.B.

1. die in der Polyurethanchemie an sich bekannten Dihydroxypolyester aus Dicarbonsäuren, z.B. Bernsteinsäure, Adipinsäure, Korksäure, Azelainsäure, Sebacinsäure, Phthalsäure, Isophthalsäure, Terephthalsäure, Tetrahydrophthalsäure usw. und Diolen, wie z.B. Ethylenglykol, Propandiol-1,2, Propandiol-1,3, Diethylenglykol, Butandiol-1,4, Hexandiol-1,6, Octandiol-1,8, Neopentylglykol, 2-Methylpropandiol-1,3, oder die verschiedenen isomeren Bishydroxymethylcyclohexane;

2. die in der Polyurethanchemie an sich bekannten Polylactone, wie z.B. die auf den obengenannten zweiwertigen Alkoholen gestarteten Polymerisate des ε-Caprolactons;

3. die in der Polyurethanchemie an sich bekannten Polyether, wie z.B. die unter Verwendung von zweiwertigen Startermolekülen, wie Wasser, den obengenannten Diolen oder 2 NH-Bindungen aufweisenden Aminen hergestellten Polymerisate bzw. Mischpolymerisate des Tetrahydrofurans, Styroloxids, Propylenoxids, Ethylenoxids, der Butylenoxide oder des Epichlorhydrins, insbesondere des Propylenoxids und gegebenenfalls Ethylenoxids. Ethylenoxid wird gegebenenfalls anteilmäßig mitverwendet, jedoch mit der Maßgabe, daß das resultierende Polyetherdiol maximal 10 Gew.-% an Ethylenoxideinheiten enthält.

Vorzugsweise werden solche Polyetherdiole mitverwendet, die ohne Mitverwendung von Ethylenoxid, d.h. insbesondere unter ausschließlicher Verwendung von Propylenoxid und Tetrahydrofuran erhalten wurden.

Bei der Herstellung der Bindemittelkomponente A) kann gegebenenfalls die Komponente c) mitverwendet werden. Wird sie eingesetzt, so erfolgt dies bevorzugt in Mengen von 0,2 bis 18 Gew.-%, besonders bevorzugt von 0,5 bis 10 Gew.-%, bezogen auf den Festkörper der Komponente A). Bei der gegebenenfalls mitzuverwendenden Komponente c) handelt es sich um die aus der Polyurethanchemie an sich bekannten niedermolekularen mindestens difunktionellen Hydroxyl- und/oder Aminogruppen aufweisenden Verbindungen mit Molmassen von 60 bis 400. Sie dienen während der Isocyanataddition als Kettenverlängerer (beim Einsatz difunktioneller Verbindungen) oder als Vernetzer (beim Einsatz von trifunktionellen oder mehrfunktionellen Verbindungen) und sind so aufgebaut, daß die funktionellen Gruppen über aliphatische, alicyclische oder aromatische Reste verbunden sind. Beispielsweise können Mengen bis zu 30 Gew.-% der gesamten Polyol-Bestandteile, vorzugsweise etwa 2 bis 20 Gew.-%, eingesetzt werden. Im folgenden sind Beispiele für verwendbare niedermolekulare Polyole und Polyamine angegeben.

Vorteilhaft haben die niedermolekularen Polyole bis zu etwa 20 Kohlenstoffatome im Molekül, wie Etyhlenglykol, Diethylenglykol, Triethylenglykol, 1,2-Propandiol, 1.3-Propandiol, 1.4-Butandiol, 1,2-Butylenglykol, 1.6-Hexandiol, Trimethylolpropan, Ricinusöl oder hydriertes Ricinusöl, Di-trimethylolpropanether, Pentaerythrit, 1.2-Cyclohexandiol, 1.4-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A und deren Mischungen.

Polyamine sind im wesentlichen Alkylen-Polyamine mit 1 bis 30 Kohlenstoffatomen, vorzugsweise etwa 2 bis 12 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Ethylendiamin, Propylendiamin, 1.4-Butylendiamin, Piperazin, 1.4-Cyclohexyldimethylamin, Hexamethylendiamin-1.6, Trimethylhexamethylendiamin, Methandiamin, Isophorondiamin, 4.4'-Diaminodicyclohexylmethan und Aminoethylethanolamin. Bevorzugte Diamine sind Alkyl- oder Cycloalkyldiamine wie Propylendiamin und 1-Amino-3-aminomethyl-3.5.5-trimethylcyclohexan. Die Kettenverlängerung kann auch mit Hydrazin erfolgen. Neben dem Hydrazin können die Ketten auch mit substituierten Hydraziden, wie Monoalkyl- oder Monoarylhydrazid oder Bishydraziden, wie beispielsweise Adipinsäure-bis-hydrazid, verlängert werden. Die Kettenverlängerung kann auch mit Wasser durchgeführt werden.

Die Kettenverlängerung kann wenigstens teilweise mit einem Polyamin erfolgen, das mindestens drei Amingruppen mit einem reaktionsfähigen Wasserstoff aufweist. Dieser Polyamin-Typ kann in einer solchen Menge eingesetzt werden, daß nach der Verlängerung des Polymers nicht umgesetzte Aminstickstoffatome mit 1 oder 2 reaktionsfähigen Wasserstoffatomen vorliegen. Solche brauchbaren Polyamine sind Diethylentriamin, Triethylentetraamin, Dipropylentriamin und Dibutylentriamin. Bevorzugte Polyamine sind die Alkyl- oder Cycloalkyltriamine wie Diethylentriamin. Um ein Gelieren bei der Kettenverlängerung zu verhindern, können auch kleine Anteile von Monoaminen wie Ethylhexylamin zugesetzt werden.

Zum Aufbau der Bindemittelkomponente A) kann gegebenenfalls auch die Komponente d) verwendet werden; bevorzugt werden dazu Mengen von 0 bis 8 Gew.-%, besonders bevorzugt 0,5 bis 6 Gew.-%, bezogen auf den Festkörpe der Komponente A), eingesetzt.

Bei den hydrophilen Aufbaukomponenten d) handelt es sich um innerhalb von Polyetherketten eingebaute Ethylenoxideinheiten aufweisende Verbindungen und zwar um

d1) Diisocyanate und/oder im Sinne der Isocyanatpolyadditionsreaktion difunktionelle Verbindungen mit gegenüber Isocyanatgruppen reaktionsfähigen Wasserstoffatomen mit seitenständigen, Ethylenoxid-Einheiten aufweisenden Polyetherketten,

d2) Monoisocyanate und/oder im Sinne der Isocyanat-Polyadditionsreaktion monofunktionelle Verbindungen mit gegenüber Isocyanatgruppen reaktionsfähigen Wasserstoffatomen mit Ethylenoxideinheiten aufweisenden Polyetherketten oder um Gemische von Verbindungen d1) und d2).

Zu den Aufbaukomponenten d1) gehören insbesondere Verbindungen der allgemeinen Formel (I)

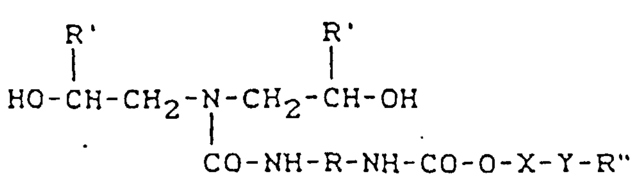

(I)

und/oder Verbindungen der allgemeinen Formel (II)

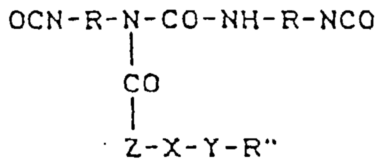 (II)

Zu den Verbindungen d2) gehören insbesondere solche der allgemeinen Formel (III)

$$HO\text{-}X\text{-}Y\text{-}R'' \qquad (III)$$

der Formel (IV)

$$HR'N\text{-}X\text{-}Y\text{-}R'' \qquad (IV)$$

und/oder Verbindungen der allgemeinen Formel (V)

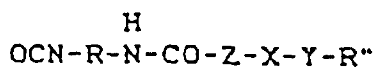 (V)

In diesen Formeln (I) bis (V) stehen

- R für einen zweiwertigen Rest, wie er durch Entfernung der Isocyanatgruppen aus einem Diisocyanat der Formel $R(NCO)_2$ der vorstehend genannten Art erhalten wird (R entspräche dann dem vorstehend genannten Rest Q),
- R' für Wasserstoff oder einen einwertigen Kohlenwasserstoffrest mit 1 bis 8 Kohlenstoffatomen, vorzugsweise für Wasserstoff oder eine Methylgruppe,
- R" für einen einwertigen Kohlenwasserstoffrest mit 1 bis 12 Kohlenstoffatomen, vorzugsweise einen unsubstituierten Alkylrest mit 1 bis 4 Kohlenstoffatomen,
- X für den Rest, wie er durch Entfernen des endständigen Sauerstoffatoms aus einer Polyalkylenoxidkette mit 5 bis 90, vorzugsweise 20 bis 70 Kettengliedern erhalten wird, welche Kettenglieder zumindest zu 40 %, vorzugsweise zumindest zu 65 % aus Ethylenoxid-Einheiten bestehen und die neben Ethylenoxid-Einheiten auch Propylenoxid-, Butylenoxid- oder Styroloxid-Einheiten darstellen können, wobei unter den letztgenannten Einheiten Propylenoxid-Einheiten bevorzugt sind,
- Y für Sauerstoff oder -NR'''-, wobei R''' bezüglich seiner Definition R" entspricht,
- Z für einen Rest, der in seiner Bedeutung der Definition von Y entspricht.

Die Herstellung dieser hydrophilen Aufbaukomponenten (I) bis (V) erfolgt in Analogie zu US-PS 3 920 598, US-PS 3 905 929, US-PS 4 190 566 oder US-PS 4 237 264.

Die zur Herstellung der Bindemittelkomponente A) verwendete Komponente e) wird in Mengen von 1 bis 12 Gew.-%, bevorzugt 1,5 bis 6 Gew.-%, eingesetzt. Bei der Komponente e) handelt es sich um Verbindungen, die mindestens eine, bevorzugt zwei mit Isocyanatgruppen reagierende H-aktive Gruppen und mindestens eine zur Anionenbildung befähigte Gruppe enthalten. Geeignete mit Isocyanatgruppen reagierende Gruppen sind insbesondere Hydroxylgruppen, sowie primäre und/oder sekundäre Aminogruppen. Gruppen, die zur Anionenbildung befähigt sind, sind Carboxyl-, Sulfonsäure und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den Hydroxylgruppen des Moleküls reagieren. Bevorzugt werden Alkansäuren mit zwei Substituenten am α-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Beispiele für solche Verbindungen sind Dihydroxypropionsäure, Dihydroxybernsteinsäure und Dihydroxybenzoesäure. Eine besonders bevorzugte Gruppe von Dihydroxyalkansäuren sind die α,α-Dimethylolalkansäuren, die durch die Strukturformel

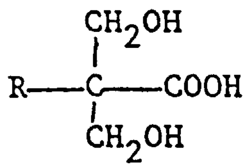

gekennzeichnet sind, worin R=Wasserstoff oder eine Alkylgruppe mit bis zu etwa 20 Kohlenstoffatomen bedeutet. Beispiele für solche Verbindungen sind 2.2-Dimethylolessigsäure, 2.2-Dimethylolpropionsäure, 2.2-Dimethylolbuttersäure und 2.2-Dimethylolpentansäure. Die bevorzugte Dihydroxyalkansäure ist 2.2-Dimethylolpropionsäure. Aminogruppenhaltige Verbindungen sind beispielsweise α,δ-Diaminovaleriansäure, 3.4-Diaminobenzoesäure, 2.4-Diaminotoluolsulfonsäure und 2.4-Diamino-diphenylethersulfonsäure. Das Carboxylgruppen enthaltende Polyol kann 3 bis 100 Gew.-%, vorzugsweise 5 bis 50 Gew.-% des gesamten Polyolbestandeiles im NCO-Präpolymeren ausmachen.

Die durch die Carboxylgruppen-Neutralisation in Salzform verfügbare Menge an ionisierbaren Carboxylgruppen

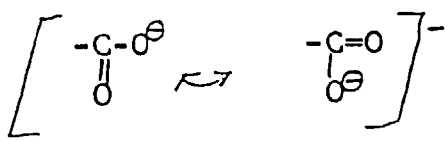

beträgt im allgemeinen wenigstens 0.4 Gew.-%, vorzugsweise wenigstens 0.17 Gew.-%. bezogen auf den Feststoff. Die obere Grenze beträgt etwa 6 Gew.-%. Die Menge an Dihydroxyalkansäuren im unneutralisierten Präpolymeren ergibt eine Säurezahl von wenigstens 5, vorzugsweise wenigstens 10. Die obere Grenze der Säurezahl liegt bei 60, vorzugsweise bei 40 bezogen auf Feststoff.

Die Menge der Komponente e) und der Neutralisationsgrad der mit der Komponente e) eingebauten ionischen Gruppen wird so bemessen, daß in dem letztendlich erhaltenen Polyurethan 0 bis 120, vorzugsweise 1 bis 80 Milliäquivalente pro 100 g Feststoff an ionischen Gruppen vorliegen, wobei die Gesamtmenge der Ethylenoxideinheiten und der ionischen Gruppen innerhalb der genannten Bereiche so bemessen sein muß, daß die Dispergierbarkeit der Polyurethanpolyharnstoffe in Wasser gewährleistet ist.

Die im erfindungsgemäß verwendeten Bindemittel eingesetzte Komponente A) weist ein Zahlenmittel der Molmasse (Mn) von 70000 bis 500000, bevorzugt größer als 80000, besonders bevorzugt größer als 100000, bevorzugt bis zu 300000 auf.

Bei der Komponente B) des erfindungsgemäß eingesetzten Bindemittels handelt es sich um ein oder mehrere Polyurethane mit einem Zahlenmittel der Molmasse (Mn) von 20000 bis 100000, bevorzugt größer als 30000, besonders bevorzugt größer als 40000, bevorzugt unter 90000, besonders bevorzugt unter 80000.

Die Messung der Molmassen erfolgt durch Gelpermeationschromatographie in Tetrahydrofuran, geeicht gegen Polystyrolstandard, unter sonst üblichen Bedingungen.

Die Polyurethane der Komponente B) sind erhältlich durch Umsetzung der vorstehend definierten Komponenten f), g), h) und i).

Die Komponente f) wird in einer Menge von 10 bis 40 Gew.-%, bevorzugt 15 bis 35 Gew.-%, bezogen auf den Gesamtfestkörper der Komponente B), eingesetzt. Bei der Komponente f) handelt es sich um ein oder mehrere organische Polyisocyanate, wie sie für die Komponente a) zur Herstellung der Bindemittelkomponente A) vorstehend beschrieben wurden.

Die zur Herstellung der Bindemittelkomponente B) verwendbare Komponente g) wird in einer Menge von 40 bis 80 Gew.-%, bevorzugt 45 bis 75 Gew.-%, bezogen auf den Gesamtfestkörper der Bindemittelkomponente B), eingesetzt.

Bei der Komponente g) handelt es sich um ein oder mehrere höhermolekulare organische Polyhydroxylverbindungen, beispielsweise um Polyesterdiole. Polyesterdiole können beispielsweise durch Schmelzen oder azeotrope Kondensation bei Temperaturen von beispielsweise 160 bis 260°C von organischen Dicarbonsäuren oder ihren Anhydriden und organischen Diolen hergestellt werden, oder sie leiten sich von einer Hydroxycarbonsäure oder einem Lacton ab.

Zur Herstellung kann beispielsweise umgesetzt werden, gegebenenfalls unter Zusatz von Katalysatoren, wie Zinnoctoat oder Dibutylzinnoxid, so lange bis praktisch alle Carboxylgruppen (Säurezahl ≦ 1) umgesetzt sind. Die OH-Zahl beträgt bevorzugt 35 bis 200, besonders bevorzugt liegt sie über 50 und unter 150. Die Molmassen betragen beispielsweise 300 bis 5000, bevorzugt 500 bis 5000, besonders bevorzugt liegen sie über 600 und unter 3000. OH-Zahl und Molmasse werden durch den verwendeten Alkoholüberschuß festgelegt. Zur Berechnung der theoretischen Molmassen genügt die Bestimmung der OH-Zahl unter Berücksichtigung einer Funktionalität von 2 bei linearem Aufbau. Die zahlenmittlere Molmasse kann dann errechnet werden nach der Formel

$$Mn = \frac{56100}{\text{OH-Zahl}} \times 2$$

Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole sind so aufgebaut, daß die beiden OH-Gruppen durch eine Kohlenstoffkette mit 2 bis 14, bevorzugt 4 bis 8 C-Atomen voneinander getrennt sind. Für besonders hydrolysebeständige Polyester werden Diole mit sterisch gehinderten primären OH-Gruppen oder mit sekundären Hydroxylgruppen verwendet. Sie bestehen beispielsweise aus Alkylenglykolen wie Ethylenglykol, Propylenglykol, Butylenglykol, Butandiol-1.4, Hexandiol-1.6, Neopentylglykol und andere Diole wie Dimethylcyclohexan . Die Säurekomponente des Polyesters besteht in erster Linie aus niedermolekularen Dicarbonsäuren oder ihren Anhydriden mit 2 bis 30, bevorzugt 4 bis 18 Kohlenstoffatomen im Molekül. Geeignete Säuren sind beispielsweise o-Phthalsäure, Isophthalsäure, Terephthalsäure, mit Alkylgruppen substituierte Isophthalsäure und/oder Therephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder Dimersisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen beispielsweise Trimellithsäureanhydrid oder das Addukt von Maleinsäureanhydrid an ungesättigte Fettsäuren anwesend sein.

Erfindungsgemäß werden auch Polyesterdiole eingesetzt, die durch Umsetzung eines Lactons mit einem Diol erhalten werden. Sie zeichnen sich durch die Gegenwart einer endständigen Hydroxylgruppen und wiederkehrende Polyesteranteile der Formel

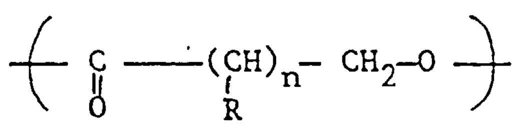

aus. Hierbei ist n bevorzugt 4 bis 6 und der Substituent R Wasserstoff, ein Alkyl-, Cycloalkyl- oder Alkoxy-Rest.

Kein Substituent enthält mehr als 12 Kohlenstoffatome. Die gesamte Anzahl der Kohlenstoffatome im Substituenten übersteigt nicht 12 pro Lactonring. Beispiele hierfür sind Hydroxycapronsäure, Hydroxybuttersäure, Hydroxydecansäure und/oder Hydroxystearinsäure. Das als Ausgangsmaterial verwendete Lacton kann durch die folgende allgemeine Formel dargestellt werden

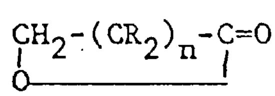

in der n und R die bereits angegebene Bedeutung haben.

Für die Herstellung der Polyesterdiole wird das unsubstituierte ε-Caprolacton, bei dem n den Wert 4 hat und alle R-Substituenten Wasserstoff sind, bevorzugt. Die Umsetzung mit Lacton wird durch niedermolekulare Polyole wie Ethylenglykol, 1.3-Propandial, 1.4-Butandiol, Dimethylolcyclohexan gestartet. Es können jedoch auch andere Reaktionskomponenten wie Ethylendiamin, Alkyldialkanolamine oder auch Harnstoff mit Caprolacton umgesetzt werden.

Als höhermolekulare Diole eignen sich auch Polylactamdiole, die durch Reaktion von beispielsweise ε-Caprolactam mit niedermolekularen Diolen hergestellt werden.

Die zur Herstellung der Bindemittelkomponente B) gegebenenfalls verwendete Komponente h) wird bevorzugt in Mengen von 0,2 bis 18 Gew.-%, besonders bevorzugt 0,5 bis 10 Gew.-%, bezogen auf den Festkörper der Komponente B) eingesetzt. Es handelt sich um eine oder mehrere niedermolekulare Verbindungen, wie sie vorstehend als Komponente c) für die Herstellung der Komponente A) beschrieben wurden. Die dort genannten Verbindungen können daher als Komponente h) eingesetzt werden.

Wird zum Aufbau der Bindemittelkomponente B) die Komponente i) verwendet, so erfolgt dies bevorzugt in Mengen von bis zu 8 Gew.-%, besonders bevorzugt in Mengen von 0,5 bis 6 Gew.-%, bezogen auf den Festkörper der Komponente B). Als Verbindungen für die Komponente i) können beispielsweise solche verwendet werden, wie sie für die Komponente d) zum Aufbau der Komponente A) angegeben sind.

Die zur Herstellung der Bindemittelkomponente B) verwendete Komponente j) wird in Mengen von 1 bis 12 Gew.-%, bevorzugt 1,5 bis 6 Gew.-%, bezogen auf den Gesamtfestkörper der Komponente B), eingesetzt. Es handelt sich um eine oder mehrere Verbindungen, wie sie vorstehend als Komponente e) für die Herstellung der Bindemittelkomponente A) beschrieben wurden. Die für die Komponente e) angegebenen Verbindungen können daher beispielsweise als Komponente j) Verwendung finden.

Die Herstellung der Polyurethan- bzw. Polyurethanharnstoff-Dispersionen der Komponenten A) und B) kann durch Umsetzung der Polyisocyante, bevorzugt von Diisocyanaten, mit den Polyolen verschiedener Molmasse, bevorzugt Diolen, erfolgen, wobei gleichzeitig in einem Teil dieser Diole oder Diamine, bevorzugt Diole mit ionischen Gruppen, bevorzugt Carboxylgruppen, eingebaut werden. Die Umsetzung der Ausgangskomponenten kann sowohl ein- als auch mehrstufig in gemischter sequenzierter Reihenfolge durchgeführt werden. Es werden dabei Produkte mit einer Glasübergangstemperatur von + 50°C bis - 50°C, bevorzugt unter 0°C erhalten. Die Komponenten A) und B) der Dispersionen unterscheiden sich somit im chemischen Aufbau und in der Molmasse.

Bei der Umsetzung der Ausgangskomponenten a) bis e) bzw. f) bis j) kann gegebenenfalls ein gegenüber Isocyanatgruppen inertes, mit Wasser mischbares Lösungsmittel mitverwendet werden, so daß die Umsetzungsprodukte letztendlich in Form einer kolloiden Lösung in einem derartigen Lösungsmittel vorliegen. In diesem Zusammenhang bedeutet "Lösung" sowohl eine echte Lösung als auch eine Wasser-in-Öl-Emulsion, die dann entstehen kann, wenn beispielsweise einzelne der Aufbaukomponenten in Form von wäßrigen Lösungen zum Einsatz gelangen. Geeignete Lösungsmittel sind beispielsweise Aceton, Methylethylketon, N-Methylpyrrolidon oder beliebige Gemische derartiger Lösungsmittel. Die Menge dieser Lösungsmittel wird im allgemeinen so bemessen, daß 10 bis 70 gew.-%ige Lösungen der Umsetzungsprodukte aus den Ausgangskomponenten a) bis e) in dem Lösungsmittel anfallen.

Bei der einstufigen Herstellung der Polyurethanpolyharnstoffe werden vorzugsweise die Ausgangskomponenten mit gegenüber Isocyanatgruppen reaktionsfähigen Gruppen miteinander gemischt und mit den Isocyanatgruppen aufweisenden Ausgangskomponenten zur Reaktion gebracht, wobei vorzugsweise zunächst in Abwesenheit von Lösungsmitteln bei 50 bis 150°C liegenden Temperaturen gearbeitet wird, und wobei gegebenenfalls an sich bekannte Katalysatoren mitverwendet werden. Hierbei werden Art und Mengenverhältnisse der Ausgangskomponenten vorzugsweise so gewählt, daß ein Äquivalentverhältnis von Isocyanatgruppen zu gegenüber Isocyanatgruppen reaktionsfähigen Gruppen von 0,8:1 bis 1,05:1 vorliegt.

Im Verlauf der Reaktion steigt die Viskosität des Gemischs an, so daß der Mischung nach und nach eines der genannten Lösungsmittel zugegeben wird. Schließlich wird eine organische Lösung des ausreagierten Polyurethans erhalten, deren Konzentration bei ca. 10 bis 70, insbesondere 15 bis 55 Gew.-% Feststoff eingestellt wird.

Beim bevorzugten Zweistufenverfahren wird vorzugsweise zunächst in der Schmelze aus überschüssigen Mengen aus Isocyanatgruppen aufweisenden Ausgangskomponenten a) und gegebenenfalls d) und Hydroxylgruppen aufweisenden Ausgangskomponenten b), c), e) und gegebenenfalls d) unter Einhaltung eines NCO/OH-Äquivalentverhältnisses von 1,1:1 bis 3,5:1, vorzugsweise 1,2:1 bis 2,5:1 in Ab- oder Anwesenheit eines Lösungsmittels der beispielhaft genannten Art bei ca. 50 bis 150°C ein NCO-Prepolymer hergestellt, welches bei Abwesenheit von Lösungsmitteln anschließend in einem Lösungsmittel der beispielhaft genannten Art aufgenommen wird. Die so erhaltene Lösung wird dann mit weiteren Kettenverlängerungs- oder Vernetzungsmitteln c), die gegebenenfalls in Form wäßriger Lösungen eingesetzt werden, zur Umsetzung gebracht, wobei als Komponente c) vorzugsweise primäre und/oder sekundäre Aminogruppen aufweisende Aufbaukomponenten der oben beispielhaft genannten Art verwendet werden. Die Menge der in dieser zweiten Stufe verwendeten Aufbaukomponenten c) wird hierbei so bemessen, daß das Äquivalentverhältnis aller in erster und zweiter Stufe zum Einsatz gelangender Ausgangskomponenten den obengemachten Angaben entspricht.

Bei beiden Varianten (ein- oder zweistufig) resultieren letztendlich Lösungen der Umsetzungsprodukte in dem genannten Lösungsmittel mit einem Feststoffgehalt innerhalb der obengenannten Bereiche.

Die zumindest teilweise Überführung von gegebenenfalls vorliegenden potentiellen ionischen Gruppen in ionische Gruppen durch Quaternierung oder Neutralisation erfolgt zweckmäßigerweise vor der Zugabe des Dispergierwassers. Im Falle der bevorzugten Verwendung von Carboxylgruppen aufweisenden Aufbaukomponenten e), insbesondere von Dimethylolpropionsäure werden bevorzugt tertiäre Amine als Neutralisationsmittel eingesetzt. Der Zusatz des Neutralisationsmittels erfolgt entweder in Form des Salzes, beispielsweise des Dimethylolpropionsäuresalzes, oder nach der Herstellung des Isocyanatprepolymeren. Derartige tertiäre Amine sind beispielsweise Triethylamin, Tri-n-butylamin, N,N,N-Trimethylcyclohexylamin, N-Methylmorpholin, N-Methylpiperazin, N,N-Dimethylethanolamin, N-Methylpiperidin, Triethanolamin. Ebenfalls bevorzugt ist, unter Einhaltung der in EP-A-269 972 dargelegten Verfahrensbedingungen, die Verwendung von Ammoniak als Neutralisationsmittel für vorab eingebaute Carboxylgruppen.

Im Anschluß an die Zugabe des als Lösungsmittel bzw. als Dispergiermedium dienenden Wassers, dessen Menge im übrigen so bemessen wird, daß 10 bis 60, vorzugsweise 20 bis 45 gew.-%ige Dispersionen resultieren, erfolgt gegebenenfalls eine destillative Entfernung zumindest der Hauptmenge des verwendeten Hilfslösungsmittels.

Die Herstellung der Polyurethan-Polyharnstoffe kann auch nach anderen Varianten gemäß Stand der Technik erfolgen, beispielsweise indem man als Kettenverlängerungsmittel c) Hydrazin oder Diamine in blockierter Form, d.h. in Form der entsprechenden Azine bzw. Ketimine verwendet, wie dies in US-PS 4 269 748 bzw. US-PS 4 829 122 gelehrt wird.

Weiterhin ist es möglich, das sogenannte PrepolymerMisch-Verfahren anzuwenden (vgl. D. Dieterich, Angew. Makromol. Chem. 98, 142 (1981)), indem zunächst in der oben beschriebenen Weise ein NCO-Prepolymer hergestellt wird und dieses nach zumindest teilweiser Überführung von gegebenenfalls vorliegenden potentiellen ionischen Gruppen in ionische Gruppen mit Wasser zu einer Emulsion vermischt wird. Die NCO-Gruppen des Prepolymeren werden danach in der wäßrigen Phase zur Reaktion gebracht, was durch Zusatz von aminischen Kettenverlängerungs- oder Vernetzungsmitteln c) und/oder durch Reaktion mit dem Wasser bewerkstelligt wird.

Die erfindungsgemäßen Überzugsmittel enthalten 8 bis 30 Gew.-%, bezogen auf das gesamte Überzugsmittel, des die Komponenten A) und B) enthaltenden Bindemittels.

Bevorzugt werden die Komponenten A) und B) so gewählt, daß die Summe ihrer Glasübergangstemperaturen (Tg) bei 20°C oder darüber liegt.

Der Wasseranteil der erfindungsgemäßen Überzugsmittel beträgt 50 bis 85 Gew.-%, bevorzugt 60 bis 80 Gew.-%, jeweils bezogen auf das gesamte Überzugsmittel. Der Wasseranteil hängt von der jeweiligen Vertriebs- und/oder Applikationsform ab. Beispielsweise kann der Wasseranteil bis zu 70 Gew.-% betragen und vor der Applikation auf bis zu 85 Gew.-% erhöht werden.

Zur Verbesserung der Rheologie können die erfindungsgemäßen Überzugsmittel 1 bis 20 Gew.-%, bevorzugt 8 bis 15 Gew.-%, jeweils bezogen auf das gesamte Überzugsmittel eines eines oder mehrerer Lösemittel, enthalten. Als Lösemittel kommen organische Lösemittel in Frage, wie sie beispielsweise auf dem Lacksektor als Lacklösemittel und/oder Zusätze zu wäßrigen Überzugsmitteln üblich sind. Geeignet sind beispielsweise aromatische Lösungsmittel, wie Xylol, Ester, wie Butylacetat, Ether, wie Ethylenglykolmonobutylether (Butylglykol), sowie Alkohole, wie n-Butanol, sowie Kohlenwasserstoffe, wie Benzin (wobei letztere in kleinen Mengen zugesetzt werden können).

Die erfindungsgemäßen Überzugsmittel können durch Vermischen der Bestandteile in üblicher Weise hergestellt werden. Beispielsweise ist es möglich, die wäßrigen Dispersionen der Komponenten A) und B) nach deren Bereitung zu vermischen und mit den weiteren Zusätzen zu versetzen. Das Vermischen kann unter Verwendung üblicher Mischeinrichtungen, wie beispielsweise Rühraggregaten, erfolgen. Dabei kann bei erhöhten Temperaturen beispielsweise in der Größenordnung von Raumtemperatur bis zu etwa 90°C gearbeitet werden.

Zur Herstellung der wäßrigen Überzugsmittel ist es jedoch auch möglich, die gegebenenfalls teilweise umgesetzten Vorprodukte der Komponenten A) und B) miteinander zu vermischen und gemeinsam, beispielsweise durch Kettenverlängerung, zu den fertigen Dispersionen umzusetzen.

Bevorzugt werden die Komponenten A) und B) so gemischt, daß die Glasübergangstemperatur der gemischten Harze bei 20°C und darüber liegt.

Die erfindungsgemäßen Überzugsmittel sind besonders geeignet für die Herstellung von Metallic-Überzügen. Gegebenenfalls können sie jedoch auch ohne Metallic-Pigmente eingesetzt werden. Beim Einsatz von Metallic-Pigmenten werden bevorzugt 0,3 bis 4 Gew.-% eines oder mehrerer Metallic-Pigmente, bezogen auf das gesamte Überzugsmittel, verwendet. Als Metallic-Pigmente kommen übliche Metallplättchen bzw. Metallschuppenpigmente in Frage, wie Metallbronzen, beispielsweise Aluminiumpigmente, wie Aluminiunbronzen.

Die erfindungsgemäßen Überzugsmittel können neben oder statt den Metallic-Pigmenten auch eines oder mehrere andere Pigmente enthalten. Im Fall des Zusatzes zu Metallic-Pigmenten liegen die weiteren Pigmente bevorzugt in Mengen von 0,2 bis 10 Gew.-%, besonders bevorzugt von 0,5 bis 6 Gew.-%, bezogen auf das gesamte Überzugsmittel vor. Werden metallic-freie Überzugsmittel formuliert, die besonders geeignet zur Herstellung von Unilackierungen sind, so liegt die Menge an zugesetzten Pigmenten bevorzugt bei 2 bis 30 Gew.-%, besonders bevorzugt bei 3 bis 20 Gew.-%, bezogen auf das gesamte Überzugsmittel. Bei den Pigmenten kann es sich um deckende, transparente oder effektgebende Pigmente handeln. Die Pigmente können löslich oder unlöslich sein. Es handelt sich um die üblichen anorganischen und organischen Pigmente, wobei auch Weißpigmente, wie Titandioxid, einbezogen sind. Als effektgebende Pigmente kommen beispielsweise Perlglanzpigmente, wie Iriodinpigmente, in Frage. Zu den Pigmenten sollen auch übliche anorganische oder organische Füllstoffe zählen, wie sie dem Fachmann auf dem Lackgebiet geläufig sind.

Die erfindungsgemäßen Überzugsmittel enthalten Neutralisationsmittel zur teilweisen Neutralisation von neutralisierbaren Gruppen. Der Neutralisationsgrad neutralisierbarer Gruppen beträgt bevorzugt 40 bis 120 % der neutralisierbaren Gruppen und liegt bevorzugt unter 100 %.

Als Neutralisationsmittel für saure Gruppen kommen auf dem Lacksektor übliche Basen in Frage, wie die vorstehend angegebenen Amine, Ammoniak oder Alkanolamine, wie N,N-Dimethylethanolamin.

Die erfindungsgemäßen Überzugsmittel enthalten gegebenenfalls übliche Additive und Hilfsstoffe, wie sie auf dem Lacksektor eingesetzt werden. Derartige Hilfsmittel und Additive sind Verdicker, die Rheologie beeinflußende Zusätze, Antischaummittel, Korrosionsinhibitoren (beispielsweise zur Inhibierung der Gasung von Metallpigmenten: Al-Gasung). Die Additive und Hilfsstoffe werden in üblichen, dem Fachmann geläufigen Mengen, je nach gewünschtem Effekt zugesetzt.

Die erfindungsgemäßen Überzugsmittel können auf verschiedene Substrate nach üblichen Beschichtungsverfahren aufgebracht werden, beispielsweise durch Spritzen, Streichen oder Rakeln. Als Substrate kommen verschiedene Materialien in Frage, wie Metalle, Kunststoffe, jedoch auch Holz, Glas und andere Substrate. Die erfindungsgemäßen Überzugsmittel sind besonders geeignet zur Herstellung von Lackierungen mit Metallic-Effekten, sowie zur Herstellung von Uni-Lackierungen.

Die erfindungsgemäßen Überzugsmittel sind physikalisch trocknend, d. h. sie erfordern kein Einbrennen und können beispielsweise bei Temperaturen in der Größenordnung von 20 bis 60°C getrocknet werden.

Die erfindungsgemäßen Überzugsmittel können nach dem Aufbringen mit Decklacken, insbesondere transparenten Decklacken, beschichtet werden. Die Beschichtung mit Decklacken kann naß-in-naß, nach kurzem Ablüften oder nach Trocknen der erfindungsgemäß erstellten Basis-Lackschicht erfolgen. Die Trocknung der Decklackschicht kann gemeinsam mit der Lackschicht aus dem erfindungsgemäßen Überzugsmittel durchgeführt werden. Als Decklacke kommen übliche, insbesondere transparente Lacke, in Frage, wie sie beispielsweise auf dem Kraftfahrzeugsektor üblich sind. Es handelt sich dabei vorwiegend um Lacke auf Lösungsmittelbasis, jedoch können Decklacke auf wäßriger Basis verwendet werden.

Die erfindungsgemäßen Überzugsmittel können, wie vorstehend erwähnt, auf verschiedensten Substraten angewendet werden. Sie eignen sich besonders zur Herstellung von Metallic-Basisschichten und Unibasisschichten in Mehrschicht-Lackaufbauten. Hier kommt als bevorzugtes Anwendungsgebiet die Lackierung von Kraftfahrzeugen bzw. Kraftfahrzeugteilen in Frage. Durch die günstige physikalische Trocknung sind die erfindungsgemäßen Überzugsmittel besonders gut zur Herstellung von Reparaturlackierungen bzw. als Reparaturlacke geeignet.

Die folgenden Beispiele erläutern die Erfindung:

Herstellungsbeispiel 1:

Polyurethanpolyharnstoff-Dispersion A

Aus 850 Teilen eines Polycarbonats aus Hexandiol-1,6 (hergestellt durch die Reaktion von Hexandiol-1,6 und Diphenylcarbonat; Hydroxylzahl: 56, Molekulargewicht: ca. 2000), 67,5 Teilen eines monofunktionellen Polyetheralkohols der OH-Zahl 26, hergestellt durch Alkoxylierung von n-Butanol unter Verwendung eines Gemisches aus 83 % Ethylenoxid und 17 % Propylenoxid, 21,4 Teilen 2,2-Bishydroxymethylpropionsäure (DMPS) und 22,5 Teilen Butandiol-1,4 wird durch Umsetzung bei 100° C mit einem Gemisch aus 151,2 Teilen 1,6-Diisocyanatohexan (HDI) und 199,8 Teilen 3-Isocyanatomethyl-3,5,5-trimethylcyclohexylisocyanat (IPDI) ein Prepolymer gebildet, welches einen Gehalt an freien Isocyanatgruppen von etwa 5 % aufweist. Das Prepolymer wird in 2440 Teilen Aceton aufgelöst; die Lösung wird auf 50° C abgekühlt.

Aus 19,8 Teilen Ethylendiamin und 7,5 Teilen Hydrazinhydrat wird eine Lösung in 500 Teilen Wasser zubereitet. Diese Lösung wird langsam unter gutem Rühren zu der Prepolymerlösung gegeben; dabei entsteht eine dünnflüssige, weißlich-trübe Lösung. Nun werden 13,4 Teile N,N-Dimethylethanolamin zugesetzt. Unter starkem Rühren werden jetzt 1525 Teile entionisiertes Wasser zugegeben, dabei bildet sich eine opake blau-weiße Dispersion des Festkörpers. Durch Destillation im Vakuum wird aus dieser Dispersion das Aceton entfernt; zurück bleibt eine rein wäßrige Dispersion, die 40 % Feststoff enthält.

Der Festkörper der Dispersion enthält (mEq-% = Milliäquivalentprozent pro 100 g Feststoff)

| | |
|---|---|
| 410 mEq-% | Carbonatgruppen (-O-CO-O-) |
| 148 mEq-% | Urethangruppen (-NH-CO-O-) |
| 95 mEq-% | Harnstoffgruppen (-NH-CO-NH-) |
| 243 mEq-% | Urethan- und Harnstoffgruppen |

Herstellungsbeispiel 2:

Wäßrige Polyurethan-Dispersion B

In einem Reaktionsgefäß mit Rührer, Innenthermometer, Heizung und Rückflußkühler werden 250 g eines linearen

Polyesters (aufgebaut aus Adipinsäure, Isophthalsäure, Hexandiol; OH-Zahl 77, Säurezahl 10) mit 80 g Methylethylketon und 53,3 g N-Methylpyrrolidon auf 70° C erwärmt und bei dieser Temperatur 74 g hydriertes Bisphenol A sowie 28,3 g Dimethylolpropionsäure zugesetzt. Der Ansatz wird auf 120° C erwärmt und eine halbe Stunde bei dieser Temperatur gerührt. Anschließend werden bei 70° C 146,7 g Hexamethylendiisocyanat zugesetzt. Nach einer exothermen Phase (Temperatur < 90° C) wird der Ansatz so lange bei 75° C gehalten, bis die Restisocyanatzahlwerte kleiner als 1,8 sind. Die warme Harzmischung wird in 891 g entionisiertes Wasser und 23,5 g Triethylamin unter starkem Rühren dispergiert. 5 min nach Ende der Harzzugabe werden 10,5 g Propylendiamin-1,3 in 75 g entionisiertes Wasser zugesetzt und der Ansatz noch 1 Stunde gerührt.

Es resultierte eine durchscheinende wäßrige Dispersion mit folgenden Kenndaten:

| | |
|---|---|
| Feststoffgehalt | 30 % |
| Viskosität (20° C) | 109 mPa·s |
| pH-Wert | 9,8 |
| Säurezahl | 27 (mg KOH pro g Festharz) |
| Mn | 34 000 |

Vergleichsversuch

Herstellung einer Dispersion C nach EP-A-0 089 497

In einem Reaktionsgefäß mit Rührer, Innnenthermometer, Heizung und Rückflußkühler werden 1105 g eines linearen Polyesters (aufgebaut aus Adipinsäure, Isophthalsäure und Hexandiol mit einer OH-Zahl von 102) auf 90° C erwärmt und bei dieser Temperatur 1,8 g Trimethylolpropan sowie 393 g Isophorondiisocyanat zugesetzt. Diese Temperatur wird gehalten bis die NCO-Zahl 3,8 beträgt. Nach Abkühlen auf 60° C werden eine Lösung aus 25,3 g Dimethylolpropionsäure, 18,1 Triethylamin und 250 g N-Methylpyrrolidon zugegeben. Nach Erwärmen auf 90° C und 1 Stunde Halten, wird eine NCO-Zahl von 0,5 erhalten. Dieses Produkt wird sofort in 853 g entionisiertem Wasser eingerührt und in 20 min eine Mischung von 2,4 g Ethylendiamin und 104 g Wasser zugegeben.

| | |
|---|---|
| Feststoffgehalt | 33,7 Gew.-% (30 min 150° C im Umluftofen) |
| Säurezahl | 15 (mg KOH pro g Festharz) |
| MEQ-Wert | 20,9 |
| pH-Wert | 7,7 |
| mittlere Teilchengröße | 123 nmm |
| zahlenmittlere Molmasse | Mn > 130 000 |

Herstellungsbeispiel 3:

Herstellung von Metallic-Wasserbasislacken

Aus den vorstehend hergestellten Dispersionen A bis C werden wäßrige Metallic-Basislacke mit den folgenden Bestandteilen hergestellt.

| | |
|---|---|
| 35,5[x)] Tle. | der Dispersionen A bis C |
| 46,1[x)] Tle. | Wasser |
| 4,8 Tle. | n-Butanol |
| 5,3 Tle. | Butylglykol |
| 1,6 Tle. | N-Methylpyrrolidon |
| 0,3 Tle. | eines handelsüblichen Korrosionsinhibitors zur Verhinderung der Aluminium-Gasung |
| 2,1 Tle. | eines handelsüblichen Verdickers |
| 0,2 Tle. | N,N-Dimethylethanolamin |
| 4,1 Tle. | einer handelsüblichen Aluminium-Paste, 60 % Al |

[x)] jeweils Dispersionen mit ca. 40 % Festkörper (FK); bei niedrigerem FK werden die Dispersions- und Wassermengen entsprechend korrigiert, so daß jeweils gebrauchsfertige Überzugsmittel mit dem gleichen FK-Gehalt resultieren.

Die resultierenden Metallic-Basislacke zeigen eine Viskosität von ca. 30 sek. (DIN-Becher 4 mm-Düse, 23° C) und werden zum Erreichen der Spritzviskosität von ca. 20 sek. mit ca. 20 % Wasser verdünnt.

Mit den Dispersionen werden Lackierungen wie folgt durchgeführt:
Lackieraufbau der bewerteten Bleche:

- Blankgeschliffenes Karosserieblech
- Praxisübliche 2K-Epoxi-Haftgrundierung
- Praxisüblicher 2K-PU-Füller
- Wasserbasislack
- Praxisüblicher 2K-PU-Klarlack, Medium solid-Typ, FK 47 %

Applikation und Trocknung der Decklackschicht (Basislack + Klarlack):

- Spritzapplikation der Wasser-Basislacke wie in den Beispielen 1 bis 4 der folgenden Tabelle aufgeführt.
- 40 min Vortrocknung bei Raumtemperatur
- Spritzapplikation des Klarlackes
- 10 min Ablüften bei Raumtemperatur
- 45 min Trocknung bei 60° C

Erläuterung:

Tle = Gewichtsteile
2K = Zwei Komponenten
PU = Polyurethan

Die Eigenschaften der erhaltenen Lackierungen sind in der folgenden Tabelle dargestellt:

Vergleichsprüfung Metallic-Basislacke

| Beisp. | Bindemittel | Härte vor / nach F/W | Haftung vor / nach F/W | Fülle/Glanz nach F/W | Metallic-Effekt (Flop) |
|---|---|---|---|---|---|
| 1 | Dispersion: Komponente A | 2 / 2-3 | 1 / 2 | 2-3 | 2-3 |
| 2 | Dispersion: Komponente B | 2-3 / 3 | 1 / 2 | 3 | 3 |
| 3 | Erfindungsgemäße Mischung der Komponenten A+B | 2 / 2- | 1 / 2 | 2 | 2 |
| 4 | Vergleichsversuch: Dispersion C | 2-3 / 3 | 2 / 2-3 | 3 | 2-3 |

F/W = Schwitzwasserbeständigkeit
DIN 50017 KK 72h

Noten: 1 = sehr gut, 2 = gut,
3 = bedingt brauchbar, 4 = unbrauchbar

Haftung: Gitterschnittmethode DIN 53151

Herstellungsbeispiel 4

Herstellung von Uni-Wasserbasislacken

Aus den vorstehend hergestellten Dispersionen A bis C werden wäßrige Uni-Basislacke mit den folgenden Bestandteilen hergestellt:

| | |
|---|---|
| 34,5x) Tle. | der Dispersionen A bis C |
| 21,1x) Tle. | Wasser |
| 12,1 Tle. | Butylglykol |
| 1,3 Tle. | eines handelsüblichen Verdickers |
| 0,14 Tle. | N ,N-Dimethylethanolamin |
| 22,1 Tle. | eines handelsüblichen Titandioxid-Pigmentes |
| 0,5 Tle. | eines handelsüblichen Kupferphthalocyanin-Pigmentes |
| 0,16 Tle. | eines handelsüblichen Entschäumers |
| 8,1 Tle. | eines handelsüblichen PU-Anreibehilfsmittels (FK30%) |

x) gilt für Dispersionen mit ca. 40 % FK; bei niedrigerem FK werden die Dispersions- und Wassermengen entsprechend korrigiert, sodaß jeweils gebrauchsfertige Überzugsmittel mit dem gleichen FK-Gehalt resultieren.

Die resultierenden Uni-Basislacke zeigen eine Viskosität von ca. 40-50 sek. ( DIN-Becher 4 mm-Düse, 23°C ) und werden zum Erreichen der Spritzviskosität von ca. 20 sek. mit ca. 10-15 % Wasser verdünnt.

**Patentansprüche**

**1.** Physikalisch trocknendes Überzugsmittel auf wäßriger Basis, enthaltend

8 bis 30 Gew.-% eines Bindemittels, bei dem es sich um ein Gemisch handelt aus

A) 10 bis 90 Gew.-% eines oder mehrerer Carbonatgruppierungen enthaltender Polyurethane mit einem Zahlenmittel der Molmasse (Mn) von 70000 bis 500000, in Form einer wäßrigen Dispersion, und

B) 90 bis 10 Gew.-% eines oder mehrerer Carbonsäureestergruppen enthaltender Polyurethane mit einem Zahlenmittel der Molmasse (Mn) von 20000 bis 100000, in Form einer wäßrigen Dispersion,

wobei sich die Gewichtsprozente der Komponenten A) und B) jeweils auf den Bindemittelfestkörper beziehen und auf 100 Gew.-% addieren,

50 bis 85 Gew.% Wasser,

1 bis 20 Gew.-% eines oder mehrerer Lösemittel,

0,3 bis 4 Gew.-% eines oder mehrerer Metallicpigmente,

0 bis 10 Gew.-% eines oder mehrerer färbender und/oder effektgebender Pigmente,

Neutralisationsmittel zur Erzielung eines Neutralisationsgrades der neutralisierbaren Gruppen des Bindemittels von 40 bis 120 %,
sowie gegebenenfalls übliche Additive und Hilfsstoffe,
wobei die Bindemittelkomponente

A) erhältlich ist durch Umsetzung von

a) 10 bis 40 Gew.-% eines oder mehrerer organischer Polyisocyanate, die keine hydrophilen oder in hydrophile Gruppen überführbare Gruppen aufweisen,

b) 40 bis 80 Gew.-% einer oder mehrerer höhermolekularer organischer Polyhydroxylverbindungen, die

keine hydrophilen oder in hydrophile Gruppen überführbare Gruppen aufweisen, und die zumindest zu 50 Gew.-% aus einem oder mehreren Polyhydroxypolycarbonaten bestehen,

c) 0 bis 18 Gew.-% Wasser und/oder einer oder mehrerer niedermolekularer Verbindungen, die mindestens zwei gegenüber Isocyanatgruppen reaktionsfähige Gruppen, jedoch keine hydrophilen oder in hydrophile Gruppen überführbare Gruppen aufweisen,

d) 0 bis 8 Gew.-% einer oder mehrerer nicht-ionisch-hydrophiler Verbindungen, die mindestens eine Isocyanatgruppe oder mindestens eine gegenüber Isocyanatgruppen reaktionsfähige Gruppe aufweisen und

e) 1 bis 12 Gew.-% einer oder mehrerer Verbindungen, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen,

und wobei die Bindemittelkomponente

B) erhältlich ist durch Umsetzung von

f) 10 bis 40 Gew.-% eines oder mehrerer organischer Polyisocyanate, die keine hydrophilen oder in hydrophile Gruppen überführbare Gruppen aufweisen,

g) 40 bis 80 Gew.-% einer oder mehrerer höhermolekularer organischer Polyhydroxylverbindungen, die keine hydrophilen oder in hydrophile Gruppen überführbare Gruppen aufweisen,

h) 0 bis 18 Gew.-% Wasser und/oder einer oder mehrerer niedermolekularer Verbindungen, die mindestens zwei gegenüber Isocyanatgruppen reaktionsfähige Gruppen, jedoch keine hydrophilen oder in hydrophile Gruppen überführbare Gruppen aufweisen,

i) 0 bis 8 Gew.-% einer oder mehrerer nicht-ionisch-hydrophiler Verbindungen, die mindestens eine Isocyanatgruppe oder mindestens eine gegenüber Isocyanatgruppen reaktionsfähige Gruppe aufweisen, und

j) 1 bis 12 Gew.-% einer oder mehrerer Verbindungen, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen.

**2.** Physikalisch trocknendes überzugsmittel nach Anspruch 1, dadurch gekennzeichnet, daß es sich bei der Komponente A) und B) des Bindemittels um einen oder mehrere Polyurethanharnstoffe handelt.

**3.** Physikalisch trocknendes überzugsmittel nach Anspruch 1 oder 2, dadurch gekennzeichnet, daß die Summe der Glasübergangstemperaturen der Komponenten A) und B) bei 20°C oder darüber liegt.

**4.** Verwendung der physikalisch trocknenden überzugsmittel nach Anspruch 1, 2 oder 3 zur Herstellung von Mehrschicht-Lackierungen.

**5.** Verwendung nach Anspruch 4 auf dem Kraftfahrzeugsektor.

**6.** Verwendung nach Anspruch 4 oder 5 zur Herstellung von Metallic-Lackierungen für Reparaturzwecke.

**7.** Verfahren zur Herstellung eines physikalisch trocknenden überzugsmittels, dadurch gekennzeichnet, daß man eine Komponente A) in Form eines oder mehrerer Carbonatgruppierungen enthaltender Polyurethane mit einem Zahlenmittel der Molmasse (Mn) von 70000 bis 500000, als wäßrige Dispersion herstellt durch Umsetzung von

a) 10 bis 40 Gew.-% eines oder mehrerer organischer Polyisocyanate, die keine hydrophilen oder in hydrophile Gruppen überführbare Gruppen aufweisen,

b) 40 bis 80 Gew.-% einer oder mehrerer höhermolekularer organischer Polyhydroxylverbindungen, die keine hydrophilen oder in hydrophile Gruppen überführbare Gruppen aufweisen, und die zumindest zu 50 Gew.-%

aus einem oder mehreren Polyhydroxypolycarbonaten bestehen,

c) 0 bis 18 Gew.-% Wasser und/oder einer oder mehrerer niedermolekularer Verbindungen, die mindestens zwei gegenüber Isocyanatgruppen reaktionsfähige Gruppen, jedoch keine hydrophilen oder in hydrophile Gruppen überführbare Gruppen aufweisen,

d) 0 bis 8 Gew.-% einer oder mehrerer nicht-ionisch-hydrophiler Verbindungen, die mindestens eine Isocyanatgruppe oder mindestens eine gegenüber Isocyanatgruppen reaktionsfähige Gruppe aufweisen und

e) 1 bis 12 Gew.-% einer oder mehrerer Verbindungen, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen,

und daß man eine Bindemittelkomponente B) in Form eines oder mehrerer, Carbonsäureestergruppen enthaltender Polyurethane mit einem Zahlenmittel der Molmasse (Mn) von 20000 bis 100000, als wäßrige Dispersion, herstellt durch Umsetzung von

f) 10 bis 40 Gew.-% eines oder mehrerer organischer Polyisocyanate, die keine hydrophilen oder in hydrophile Gruppen überführbare Gruppen aufweisen,

g) 40 bis 80 Gew.-% einer oder mehrerer höhermolekularer organischer Polyhydroxylverbindungen, die keine hydrophilen oder in hydrophile Gruppen überführbare Gruppen aufweisen,

h) 0 bis 18 Gew.-% Wasser und/oder einer oder mehrerer niedermolekularer Verbindungen, die mindestens zwei gegenüber Isocyanatgruppen reaktionsfähige Gruppen, jedoch keine hydrophilen oder in hydrophile Gruppen überführbare Gruppen aufweisen,

i) 0 bis 8 Gew.-% einer oder mehrerer nicht-ionisch-hydrophiler Verbindungen, die mindestens eine Isocyanatgruppe oder mindestens eine gegenüber Isocyanatgruppen reaktionsfähige Gruppe aufweisen, und

j) 1 bis 12 Gew.-% einer oder mehrerer Verbindungen, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen,

daß man ein Gemisch aus 10 bis 90 Gew.-% der Komponente A) und 90 bis 10 Gew.-% der Komponente B) wobei sich die Gewichtsprozente der Komponenten A) und B) jeweils auf den Bindemittelfestkörper beziehen und auf 100 Gew.-% addieren, bereitet,
und daß man 8 bis 30 Gew.-% dieses Gemischs mit 50 bis 85 Gew.-% Wasser,

1 bis 20 Gew.-% eines oder mehrerer Lösemittel,

0,3 bis 4 Gew.-% eines oder mehrerer Metallicpigmente,

0 bis 10 Gew.-% eines oder mehrerer färbender und/oder effektgebender Pigmente,

Neutralisationsmittel zur Erzielung eines Neutralisationsgrades der neutralisierbaren Gruppen des Bindemittels von 40 bis 120 %,
sowie gegebenenfalls üblichen Additiven und Hilfsstoffen,
vermischt.

## Claims

1. Physically drying water-borne coating composition which contains

from 8 to 30 wt.% of a binder which is a mixture of

A) from 10 to 90 wt.% of one or more polyurethanes containing carbonate groupings and having a number

average molecular weight (Mn) of 70000 to 500000, in the form of an aqueous dispersion, and

B) from 90 to 10 wt.% of one or more polyurethanes containing carboxylic acid ester groups and having a number average molecular weight (Mn) of 20000 to 100000, in the form of an aqueous dispersion,

wherein the percentages of the components A) and B) by weight relate in each case to the binder solids and total 100 wt.%,

from 50 to 85 wt.% water,

from 1 to 20 wt.% of one or more solvents,

from 0.3 to 4 wt.% of one or more metallic pigments,

from 0 to 10 wt.% of one or more colouring and/or special effect-imparting pigments,

neutralising agent to obtain a degree of neutralisation of from 40 to 120% of the neutralisable groups of the binder, and optionally conventional additives and auxiliary substances,
wherein the binder component

A) is obtainable by reacting

a) from 10 to 40 wt.% of one or more organic polyisocyanates which contain neither hydrophilic groups nor groups which are convertible into hydrophilic groups,

b) from 40 to 80 wt.% of one or more high molecular weight organic polyhydroxyl compounds which contain neither hydrophilic groups nor groups which are convertible into hydrophilic groups, and whereof at least 50 wt.% consist of one or more polyhydroxy polycarbonates,

c) from 0 to 18 wt.% of water and/or of one or more low molecular weight compounds which while containing at least two groups which are capable of reacting with isocyanate groups, contain neither hydrophilic groups nor groups which are convertible into hydrophilic groups,

d) from 0 to 8 wt.% of one or more nonionically hydrophilic compounds which contain at least one isocyanate group or at least one group which is capable of reacting with isocyanate groups and

e) from 1 to 12 wt.% of one or more compounds which contain, in addition to at least one ionic group or at least one group which is convertible into an ionic group, at least one hydrogen atom which is capable of reacting with isocyanate groups,

and wherein the binder component

B) is obtainable by reacting

f) from 10 to 40 wt.% of one or more organic polyisocyanates containing neither hydrophilic groups nor groups which are convertible into hydrophilic groups,

g) from 40 to 80 wt.% of one or more high molecular weight organic polyhydroxyl compounds containing neither hydrophilic groups nor groups which are convertible into hydrophilic groups,

h) from 0 to 18 wt.% of water and/or of one or more low molecular weight compounds which while containing at least two groups which are capable of reacting with isocyanate groups, contain neither hydrophilic groups nor groups which are convertible into hydrophilic groups,

i) from 0 to 8 wt.% of one or more nonionically hydrophilic compounds which contain at least one isocyanate group or at least one group which is capable of reacting with isocyanate groups, and

j) from 1 to 12 wt.% of one or more compounds which contain, in addition to at least one ionic group or at

least one group which is convertible into an ionic group, at least one hydrogen atom which is capable of reacting with isocyanate groups.

2. Physically drying coating composition according to Claim 1, characterised in that the components A) and B) of the binder are constituted by one or more polyurethane ureas.

3. Physically drying coating composition according to Claim 1 or 2, characterised in that the sum of the glass transition temperatures of the components A) and B) is around 20°C or above.

4. Use of the physically drying coating compositions according to Claim 1, 2 or 3 to produce multi-coat lacquerings.

5. Use according to Claim 4 in the automotive sector.

6. Use according to Claim 4 or 5 to produce metallic lacquerings for refinishing purposes.

7. Process for the preparation of a physically drying coating composition, characterised in that a component A) in the form of one or more polyurethanes containing carbonate groupings and having a number average molecular weight (Mn) of 70000 to 500000 is prepared as an aqueous dispersion by reacting

a) from 10 to 40 wt.% of one or more organic polyisocyanates which contain neither hydrophilic groups nor groups which are convertible into hydrophilic groups,

b) from 40 to 80 wt.% of one or more high molecular weight organic polyhydroxyl compounds which contain neither hydrophilic groups nor groups which are convertible into hydrophilic groups, and whereof at least 50 wt.% consist of one or more polyhydroxy polycarbonates,

c) from 0 to 18 wt.% water and/or one or more low molecular weight compounds which while containing at least two groups which are capable of reacting with isocyanate groups, contain neither hydrophilic groups nor groups which are convertible into hydrophilic groups,

d) from 0 to 8 wt.% of one or more nonionically hydrophilic compounds which contain at least one isocyanate group or at least one group which is capable of reacting with isocyanate groups and

e) from 1 to 12 wt.% of one or more compounds which contain, in addition to at least one ionic group or at least one group which is convertible into an ionic group, at least one hydrogen atom which is capable of reacting with isocyanate groups,

and that a binder component B) in the form of polyurethanes containing one or more carboxylic acid ester groups and having a number average molecular weight (Mn) of 20000 to 100000 is prepared as an aqueous dispersion by reacting

f) from 10 to 40 wt.% of one or more organic polyisocyanates containing neither hydrophilic groups nor groups which are convertible into hydrophilic groups,

g) from 40 to 80 wt.% of one or more high molecular weight organic polyhydroxyl compounds containing neither hydrophilic groups nor groups which are convertible into hydrophilic groups,

h) from 0 to 18 wt.% of water and/or of one or more low molecular weight compounds which while containing at least two groups which are capable of reacting with isocyanate groups, contain neither hydrophilic groups nor groups which are convertible into hydrophilic groups,

i) from 0 to 8 wt.% of one or more nonionically hydrophilic compounds which contain at least one isocyanate group or at least one group which is capable of reacting with isocyanate groups, and j) from 1 to 12 wt.% of one or more compounds which contain, in addition to at least one ionic group or at least one group which is convertible into an ionic group, at least one hydrogen atom which is capable of reacting with isocyanate groups,

that a mixture of from 10 to 90 wt.% of the component A) and from 90 to 10 wt.% of the component B) is prepared, wherein the percentages by weight of the components A) and B) relate in each case to the binder solids and total

100 wt.%,
and that from 8 to 30 wt.% of the latter mixture is mixed with from 50 to 85 wt.% water,

from 1 to 20 wt.% of one or more solvents,

from 0.3 to 4 wt.% of one or more metallic pigments,

from 0 to 10 wt.% of one or more colouring or special effect-imparting pigments,

neutralising agent to obtain a degree of neutralisation of from 40 to 120% of the neutralisable groups of the binder, and optionally conventional additives and auxiliary substances.

**Revendications**

**1.** Produit de revêtement à base aqueuse et à séchage physique, contenant

8 à 30 % en poids d'un liant consistant lui-même en un mélange de

A) 10 à 90 % en poids d'un ou plusieurs polyuréthannes contenant des groupements carbonate et ayant une masse moléculaire moyenne, moyenne en nombre, Mn, de 70 000 à 500 000, à l'état de dispersion aqueuse, et
B) 90 à 10 % en poids d'un ou plusieurs polyuréthannes contenant des groupes ester d'acide carboxylique et ayant une masse moléculaire moyenne, moyenne en nombre, Mn, de 20 000 à 100 000, à l'état de dispersion aqueuse,

les pourcentages pour les composants A) et B) se rapportant aux matières solides et se complétant à 100 % en poids,

50 à 85 % en poids d'eau,
1 à 20 % en poids d'un ou plusieurs solvants,
0,3 à 4 % en poids d'un ou plusieurs pigments à effet métallique,
0 à 10 % en poids d'un ou plusieurs pigments colorants et/ou à effets,

des agents neutralisant en quantité suffisante pour arriver à un taux de neutralisation de 40 à 120 % des groupes neutralisables du liant,
et le cas échéant des additifs et produits auxiliaires usuels,
le composant A) du liant étant obtenu par réaction de

a) 10 à 40 % en poids d'un ou plusieurs polyisocyanates organiques ne contenant pas de groupe hydrophile ni de groupe convertible en groupe hydrophile,
b) 40 à 80 % en poids d'un ou plusieurs composés organiques polyhydroxylés à haut poids moléculaire ne contenant pas de groupe hydrophile ou de groupe convertible en groupe hydrophile qui consistent pour au moins 50 % en poids en un ou plusieurs polyhydroxypolycarbonates,
c) 0 à 18 % en poids d'eau et/ou d'un ou plusieurs composés à bas poids moléculaire contenant au moins deux groupes réactifs avec les groupes isocyanate mais pas de groupe hydrophile ni de groupe convertible en groupe hydrophile,
d) 0 à 8 % en poids d'un ou plusieurs composés non-ioniques hydrophiles contenant au moins un groupe isocyanate ou au moins un groupe réactif avec les groupes isocyanate, et
e) 1 à 12 % en poids d'un ou plusieurs composés qui, avec au moins un groupe ionique ou au moins un groupe convertible en groupe ionique, contiennent au moins un atome d'hydrogène réactif avec les groupes isocyanate,

et le composant B) du liant étant obtenu par réaction de

f) 10 à 40 % en poids d'un ou plusieurs polyisocyanates organiques ne contenant pas de groupe hydrophile, ni de groupe convertible en groupe hydrophile,
g) 40 à 80 % en poids d'un ou plusieurs composés organiques polyhydroxylés à haut poids moléculaire qui

ne contiennent pas de groupe hydrophile ni de groupe convertible en groupe hydrophile,
h) 0 à 18 % en poids d'eau et/ou d'un ou plusieurs composés à bas poids moléculaire contenant au moins deux groupes réactifs avec les groupes isocyanate mais pas de groupe hydrophile ni de groupe convertible en groupe hydrophile,
i) 0 à 8 % en poids d'un ou plusieurs composés non-ioniques hydrophiles contenant au moins un groupe isocyanate ou au moins un groupe réactif avec les groupes isocyanate,

et

j) 1 à 12 % en poids d'un ou plusieurs composés qui, avec au moins un groupe ionique ou au moins un groupe convertible en groupe ionique, contiennent au moins un atome d'hydrogène réactif avec les groupes isocyanate.

**2.** Produit de revêtement à séchage physique selon revendication 1, caractérisé en ce que les composants A) et B) du liant consistent en une ou plusieurs polyuréthanne-urées.

**3.** Produit de revêtement à séchage physique selon revendication 1 ou 2, caractérisé en ce que la somme des températures de transition du second ordre des composants A) et B) est de 20° C ou au-dessus.

**4.** Utilisation des produits de revêtement à séchage physique selon revendication 1, 2 ou 3 pour l'application de revêtements à plusieurs couches.

**5.** Utilisation selon revendication 4, dans le domaine des véhicules.

**6.** Utilisation selon revendication 4 ou 5, pour l'application de revêtements à effet métallique après réparation.

**7.** Procédé pour la préparation d'un produit de revêtement à séchage physique, caractérisé en ce que l'on prépare un composant A), sous la forme d'un ou plusieurs polyuréthannes contenant des groupements carbonate et ayant un poids moléculaire moyen, moyenne en nombre, Mn, de 70 000 à 500 000, à l'état de dispersion aqueuse, par réaction de

a) 10 à 40 % en poids d'un ou plusieurs polyisocyanates organiques ne contenant pas de groupe hydrophile ni de groupe convertible en groupe hydrophile,
b) 40 à 80 % en poids d'un ou plusieurs composés organiques polyhydroxylés à haut poids moléculaire ne contenant pas de groupe hydrophile ni de groupe convertible en groupe hydrophile et qui consistent pour au moins 50 % en poids en un ou plusieurs polyhydroxypolycarbonates,
c) 0 à 18 % en poids d'eau et/ou d'un ou plusieurs composés à bas poids moléculaire contenant au moins deux groupes réactifs avec les groupes isocyanate mais pas de groupe hydrophile ni de groupe convertible en groupe hydrophile,
d) 0 à 8 % en poids d'un ou plusieurs composés non-ioniques hydrophiles contenant au moins un groupe isocyanate ou au moins un groupe réactif avec les groupes isocyanate,

et

e) 1 à 12 % en poids d'un ou plusieurs composés qui, avec au moins un groupe ionique ou un groupe convertible en groupe ionique, contiennent au moins un atome d'hydrogène réactif avec les groupes isocyanate,

et en ce que l'on prépare un composant B) du liant sous la forme d'un ou plusieurs polyuréthannes contenant des groupes ester d'acide carboxylique et ayant une masse moléculaire moyenne, moyenne en nombre, Mn, de 20 000 à 100 000, à l'état de dispersion aqueuse, par réaction de

f) 10 à 40 % en poids d'un ou plusieurs polyisocyanates organiques ne contenant pas de groupe hydrophile ni de groupe convertible en groupe hydrophile,
g) 40 à 80 % en poids d'un ou plusieurs composés organiques polyhydroxylés à haut poids moléculaire qui ne contiennent pas de groupe hydrophile ni de groupe convertible en groupe hydrophile,
h) 0 à 18 % en poids d'eau et/ou d'un ou plusieurs composés à bas poids moléculaire contenant au moins deux groupes réactifs avec les groupes isocyanate mais pas de groupe hydrophile ni de groupe convertible en groupe hydrophile,

i) 0 à 8 % en poids d'un ou plusieurs composés non-ioniques hydrophiles contenant au moins un groupe isocyanate ou au moins un groupe réactif avec les groupes isocyanate, et

j) 1 à 12 % en poids d'un ou plusieurs composés qui, avec au moins un groupe ionique ou au moins un groupe convertible en groupe ionique, contiennent au moins un atome d'hydrogène réactif avec les groupes isocyanate,

en ce que l'on forme un mélange de 10 à 90 % du composant A) et 90 à 10 % en poids du composant B), ces pourcentages se rapportant aux teneurs en matières solides des composants A) et B) et se complétant à 100 % en poids,

et en ce que l'on mélange de 8 à 30 % en poids de ce mélange avec 50 à 85 % en poids d'eau,

1 à 20 % en poids d'un ou plusieurs solvants,
0,3 à 4 % en poids d'un ou plusieurs pigments à effet métallique,
0 à 10 % en poids d'un ou plusieurs pigments colorants et/ou à effet,

des agents neutralisants en quantité suffisante pour parvenir à un taux de neutralisation de 40 à 120 % des groupes neutralisables du liant,

et le cas échéant, des additifs et produits auxiliaires usuels.